# EUROPEAN PATENT APPLICATION

(11) **EP 4 080 654 A1**
(43) Date of publication of application: **26.10.2022**
(21) Application number: 21918111.2
(22) Date of filing: 09.02.2021
(51) Int. Cl.: H01M 50/147

(54) **END COVER ASSEMBLY, CELL, BATTERY, ELECTRIC APPARATUS, AND MANUFACTURING METHOD**

(71) Applicant: Contemporary Amperex Technology Co., Limited, Jiaocheng District Ningde Fujian 352100 (CN)
(72) Inventor: CAI, Rulai, Ningde Fujian 352100 (CN); JIANG, Liwen, Ningde Fujian 352100 (CN); LUO, Fuping, Ningde Fujian 352100 (CN); ZHU, Tingting, Ningde Fujian 352100 (CN); FANG, Wumei, Ningde Fujian 352100 (CN)
(74) Representative: Holt, Lucy Rose
(86) International application number: PCT/CN2021/076283
(87) International publication number: WO 2022/170488

(57) **Abstract**

This application discloses an end cover assembly, a battery cell, a battery, an electrical apparatus, and a preparation method. The end cover assembly includes: an end cover, where the end cover is provided with an electrode lead-out hole, and a side, facing the inside of the battery cell, of the end cover is provided with a first mating portion; an electrode terminal, where the electrode terminal is disposed on the end cover and covers the electrode lead-out hole; and a connecting member, where the connecting member is configured to electrically connect the electrode terminal and an electrode assembly of the battery cell, the connecting member is provided with a second mating portion, and the second mating portion is configured to be mated with the first mating portion, to provide deformation resistance of the connecting member along a radial direction of the electrode lead-out hole. According to embodiments of this application, the structural strength of the connecting member is improved, and a problem of leakage of the battery cell caused when the electrode terminal is displaced or detached from the end cover due to that the connecting member is easily deformed is resolved.

## Description

### TECHNICAL FIELD

This application relates to the field of batteries, and in particular, to an end cover assembly, a battery cell, a battery, an electrical apparatus, and a preparation method.

### BACKGROUND

With the continuous development of battery technologies, there are higher requirements for performance of a battery, and it is hoped that various design factors can be considered in design of the battery. A long service life of the battery is a goal that those skilled in the art have been pursuing, but in the prior art, it is often found that a battery cell leaks electrolyte at an electrode terminal, causing the battery to be scrapped and affecting the service life of the battery.

### SUMMARY

This application provides an end cover assembly, a battery cell, a battery, an electrical apparatus, and a preparation method, to improve structural strength of a connecting member, and resolves a problem of leakage of a battery cell caused when an electrode terminal connected to the connecting member is displaced due to that the connecting member is easily deformed.

According to a first aspect of this application, an end cover assembly for a battery cell is provided, including: an end cover, where the end cover is provided with an electrode lead-out hole, and a side, facing the inside of the battery cell, of the end cover is provided with a first mating portion; an electrode terminal, where the electrode terminal is disposed on the end cover and covers the electrode lead-out hole; and a connecting member, where the connecting member is configured to electrically connect the electrode terminal and an electrode assembly of the battery cell, the connecting member is provided with a second mating portion, and the second mating portion is configured to be mated with the first mating portion, to provide deformation resistance of the connecting member along a radial direction of the electrode lead-out hole.

According to the end cover assembly in this embodiment, the first mating portion and the second mating portion are mated with each other, so that the end cover and the connecting member may support each other at a position where the first mating portion and the second mating portion are mated, which improves structural strength of the connecting member, and makes the deformation resistance of the connecting member stronger along the radial direction, thereby resolving a problem of leakage of a battery cell caused when the electrode terminal connected to the connecting member is displaced or even detached from an end cover because the connecting member has low structural strength and is easily deformed.

In some embodiments, the first mating portion and the second mating portion are mated in a plug-in manner along an axial direction of the electrode lead-out hole.

Based on mating in the plug-in manner, the first mating portion and the second mating portion are structurally nested with each other, so that the two may act upon each other along the radial direction of the electrode lead-out hole, thereby increasing difficulty of deformation of the connecting member along the radial direction, improving structural strength between the end cover and the connecting member, and improving deformation resistance of the connecting member.

In some embodiments, one of the first mating portion and the second mating portion is a first connecting convex portion, the other is a first connecting hole, the first connecting convex portion is at least partially located in the corresponding first connecting hole, and the first mating portion is disposed on an outer periphery of the electrode lead-out hole.

The first mating portion is disposed on the outer periphery of the electrode lead-out hole, and a part of the first connecting convex portion located in the first connecting hole limits further deformation of the connecting member along the radial direction of the electrode lead-out hole. In addition, such a structure of the first connecting convex portion and the first connecting hole is convenient for positioning and mounting of the end cover and the connecting member, and the assembly is convenient, helping improve assembly efficiency.

In some embodiments, the end cover is provided with a plurality of first mating portions, and the plurality of first mating portions are evenly distributed along a circumferential direction of the electrode lead-out hole. The connecting member is provided with a plurality of second mating portions, and the second mating portions are disposed corresponding to the first mating portions.

The plurality of first mating portions are evenly distributed along the circumferential direction of the electrode lead-out hole, so that after each first mating portion is mated with the corresponding second mating portion, structural strength of the connecting member at each position along the circumferential direction of the electrode lead-out hole is improved, and the deformation resistance of the entire connecting member along the radial direction is improved.

In some embodiments, the first mating portion is a first connecting convex portion, and a projection of the first connecting convex portion along an axial direction at least partially overlaps the electrode terminal.

An overlapping part of the electrode terminal and the projection of the first connecting convex portion along the axial direction support the end cover, which improves structural strength of a support portion of the end cover, reduces a possibility of deformation of the end cover at a position where the first mating portion is disposed, and also helps improve sealing performance at the connection between the electrode terminal and the end cover.

In some embodiments, the end cover assembly further includes a first insulating member, the first insulating member is disposed between the end cover and the connecting member, the first insulating member is provided with an insulating portion, the insulating portion has an accommodation cavity, and the accommodation cavity is used to accommodate the first mating portion and/or the second mating portion, to isolate the end cover from the connecting member.

The first insulating member is disposed between the end cover and the connecting member, and the first insulating member is provided with the insulating portion with the accommodation cavity to wrap the first mating portion and/or the second mating portion, to avoid contact conduction, through the first mating portion and/or the second mating portion, between the end cover and the connecting member, thereby insulating the end cover from the connecting member.

In some embodiments, the electrode terminal is provided with a third mating portion, the connecting member is provided with a fourth mating portion mated with the third mating portion, and at least one of the fourth mating portion and the third mating portion extends into the electrode lead-out hole, to be fixedly connected to the other.

In some embodiments, the third mating portion and the fourth mating portion are mated in a plug-in manner along the axial direction of the electrode lead-out hole.

Based on mating in the plug-in manner, the electrode terminal and the connecting member may be mutually restricted from moving or deforming along the radial direction of the electrode lead-out hole. After the first mating portion and the second mating portion are mated, the connecting member and the end cover are also mutually restricted from moving or deforming along the radial direction of the electrode lead-out hole. Therefore, the electrode terminal, the end cover, and the connecting member are also restricted by one another from moving or deforming, which improves stability of the overall structure. When the electrode terminal is pulled by a bus component, it is more difficult for the electrode terminal and the end cover to be displaced from the end cover along the radial direction of the electrode lead-out hole.

In some embodiments, the third mating portion includes a second connecting convex portion, the fourth mating portion includes a second connecting hole, and the second connecting convex portion is fixed in the second connecting hole.

In this way, positioning and mounting of the electrode terminal and an adapter may be facilitated.

In some embodiments, the fourth mating portion further includes a third connecting convex portion, the third connecting convex portion extends along the axial direction of the electrode lead-out hole toward a side close to the end cover, and the second connecting hole is disposed on the third connecting convex portion.

The third connecting convex portion extends along the axial direction of the electrode lead-out hole toward the side close to the end cover, so that thickness of the third connecting convex portion along the axial direction of the electrode lead-out hole is increased. The second connecting hole is disposed on the third connecting convex portion, depth of the second connecting hole along its axial direction is increased, and a contact area of the second connecting convex portion and the connecting member in the second connecting hole is increased, which helps improve connection reliability of the electrode terminal and the connecting member.

In some embodiments, a side, facing away from the electrode lead-out hole, of the connecting member is recessed toward a direction close to the electrode lead-out hole, to form the third connecting convex portion, an inner peripheral wall of the second connecting hole extends along an axial direction of the second connecting hole toward a direction away from the end cover, to form a flange, and the flange is in contact with an outer peripheral wall of the third connecting convex portion.

The third connecting convex portion is a convex structure formed when the side, facing away from the electrode lead-out hole, of the connecting member is recessed toward the other side close to the electrode lead-out hole, so that a cavity is formed inside the third connecting convex portion, thereby reducing a weight of the third connecting bulge. The inner peripheral wall of the second connecting hole extends along its axial direction toward the direction away from the end cover, to form a flange, which increases a contact area of the inner peripheral wall of the second connecting hole and the third connecting convex portion, thereby guaranteeing structural strength at the connection, reducing a weight of the end cover assembly, and increasing an energy density of the battery cell.

In some embodiments, the third connecting convex portion is at least partially accommodated in the electrode lead-out hole.

The third connecting convex portion is accommodated in the electrode lead-out hole, so that a space occupied by the third connecting convex portion of the connecting member in the battery cell may be reduced, thereby increasing the energy density of the battery cell.

In some embodiments, the connecting member further includes at least two reinforcing blocks, and the reinforcing blocks and the second mating portion are disposed alternately along the circumferential direction of the electrode lead-out hole.

The reinforcing blocks are disposed, so that the structural strength of the connecting member may be further improved.

According to a second aspect of this application, a battery cell is provided and includes: a housing, where the housing has an opening; an electrode assembly, where the electrode assembly is accommodated in the housing, and the electrode assembly includes a main body portion and a tab; and the end cover assembly according to the embodiments in the first aspect, where the end cover covers the opening of the housing, to enclose the electrode assembly in the housing, and the connecting member is connected to the tab and the electrode terminal.

According to a third aspect of this application, a battery is provided and includes the battery cell in the foregoing embodiments.

According to a fourth aspect of this application, an electrical apparatus is provided and includes the battery cell in the foregoing embodiments. The battery cell is configured to supply power.

According to a fifth aspect of this application, a method for preparing a battery cell is provided and includes: providing an end cover assembly, where the end cover assembly includes: an end cover, where the end cover is provided with an electrode lead-out hole, and a side, facing the inside of the battery cell, of the end cover is provided with a first mating portion; an electrode terminal, where the electrode terminal is disposed on the end cover and covers the electrode lead-out hole; and a connecting member, where the connecting member is configured to electrically connect the electrode terminal and an electrode assembly of the battery cell, the connecting member is provided with a second mating portion, and the second mating portion is configured to be mated with the first mating portion, to provide deformation resistance of the connecting member along a radial direction of the electrode lead-out hole; providing the electrode assembly, where the electrode assembly includes a main body portion and a tab; providing a housing, where the housing has an opening; and accommodating the electrode assembly in the housing, where the connecting member is connected to the tab and the electrode terminal, and the end cover assembly covers the opening, to enclose the electrode assembly in the housing.

The first mating portion and the second mating portion are mated with each other, so that the end cover and the connecting member may support each other at a position where the first mating portion and the second mating portion are mated, which improves structural strength of the connecting member, and makes deformation resistance of the connecting member stronger along the radial direction, thereby resolving a problem of leakage of a battery cell caused when the electrode terminal connected to the connecting member is displaced or even detached from an end cover because the connecting member has low structural strength and is easily deformed.

### BRIEF DESCRIPTION OF DRAWINGS

The accompanying drawings illustrated herein are provided to further understand this application and form a part of this application. The exemplary embodiments of this application and the descriptions thereof are used to explain this application and do not constitute an improper limitation on this application. In the accompanying drawings, the drawings are not drawn to actual scales.
FIG. 1 is a schematic structural diagram of a vehicle according to an embodiment of this application;
FIG. 2 is a schematic diagram of an exploded structure of a battery according to an embodiment of this application;
FIG. 3 is a schematic structural diagram of a battery cell according to an embodiment of this application;
FIG. 4 is a schematic diagram of an exploded structure of a battery cell according to an embodiment of this application;
FIG. 5 is a schematic structural diagram of an end cover assembly according to an embodiment of this application;
FIG. 6 is a schematic diagram of an exploded structure of an end cover assembly from a perspective (a connecting member is in an unfolded state) according to an embodiment of this application;
FIG. 7 is a schematic diagram of an exploded structure of an end cover assembly from another perspective (a connecting member is in a folded state) according to an embodiment of this application;
FIG. 8 is a schematic diagram of a cross-sectional structure of an end cover assembly along a direction A-A according to an embodiment of this application;
FIG. 9 is a schematic diagram of a cross-sectional structure of an end cover assembly along a direction A-A according to another embodiment of this application;
FIG. 10 is a schematic structural diagram of a connecting member in an unfolded state according to an embodiment of this application; and
FIG. 11 is a schematic flowchart of a method for preparing a battery cell according to an embodiment of this application.

Reference numerals in the drawings are as follows:
1. vehicle; la, motor; 1b, controller;
10. battery; 11. first portion; 12. second portion; 13. battery module;
20. battery cell;
30. housing;
40. electrode assembly;
50. end cover assembly;
60. electrode terminal; 61. third mating portion;
70. end cover; 71. first mating portion; 72. electrode lead-out hole; 73. limiting convex portion; 74. second groove; 75. abutting portion;
80. connecting member; 81. second mating portion; 82. fourth mating portion; 83. reinforcing block; 84. bending portion; 85. first non-bending portion; 86. second non-bending portion; 87. third non-bending portion; 821. second connecting hole; 822. third connecting convex portion; 823. flange; 831. radial reinforcing rib; 832. circumferential reinforcing rib;
90. first insulating member; 91. insulating portion; 92. first groove; 93. first through hole;
100. second insulating member; 110. second through hole; and
200. sealing member; 210. third through hole; 220. third groove.

### DETAILED DESCRIPTION OF EMBODIMENTS

To make the objectives, technical solutions, and advantages of this application clearer, the following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

Unless otherwise defined, all technical and scientific terms used in this specification have the same meaning as commonly understood by persons skilled in the art of this application. The terms used in the specification of this application are merely for the purpose of describing specific embodiments, and are not intended to limit this application. The terms "include" and "comprise" and any variation thereof mentioned in the specification, the claims, and the foregoing descriptions of the accompanying drawings of this application are intended to cover a non-exclusive inclusion. In the specification, the claims, and the accompanying drawings of this application, the terms such as "first" and "second" are used to distinguish between different objects, but are not used to describe a particular sequence or a major and minor relationship of the objects.

The "embodiment" mentioned in this specification means that particular features, structures, or characteristics described with reference to the embodiments may be included in at least one embodiment of this application. The presence of the phrase in various places in this specification is not necessarily referring to a same embodiment nor a separate or alternative embodiment that is mutually exclusive of other embodiments. It is explicitly and implicitly understood by those skilled in the art that the embodiments described in this specification may be combined with other embodiments.

The term "and/or" herein is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

In this application, "a plurality of" refers to two or more (including two); similarly, "a plurality of groups" refers to two or more groups (including two groups), and "a plurality of sheets" refers to two or more sheets (includes two sheets).

The inventor noticed that, during use of a battery, problems such as vibration and bumping inevitably occur. For example, when a vehicle is traveling on roads, vibration of the body is transmitted to a battery, causing a problem such as that vibration and bumping occur between battery cells installed inside the battery, and resulting in that a connecting member in the battery end cover group is easily deformed. A main reason is that thickness of the connecting member is thin, the structural strength is low, and thus the connecting member is easily deformed.

The inventor found that, the connecting member and an electrode terminal are fixed by welding, so that an end cover is directly fixed between the electrode terminal and the connecting member; since the thickness of the connecting member is relatively thin and the structural strength is small, after the connecting member and the electrode terminal are fixed by welding, once battery cells are impacted, the battery cells move relative to each other, pulling a bus component, and thus exerting a force on the electrode terminal; the force on the electrode terminal acts on the connecting member, and thus the connecting member bends and deforms along a radial direction of an electrode lead-out hole; and deformation of the connecting member affects positioning of the electrode terminal, and thus the electrode terminal is easily displaced or even detached from the end cover, resulting in liquid leakage, making the battery cells unable to use normally, and affecting service life of the battery.

Therefore, to resolve the problem that the electrode terminal is displaced due to the deformation of the connecting member, the inventor started from a perspective of improving deformation resistance of the connecting member and enhancing structural strength of the connecting member, designed a structure of the connecting member and a structure of connection between the connecting member and the electrode terminal and the end cover, and found that the structural strength and deformation resistance of the connecting member may be effectively improved by disposing a mutual mating structure for the connecting member and the end cover. When a mutual mating structure is further disposed on the connecting member and the connection terminal, the structural strength and the deformation resistance of the connecting member may also be further improved, and overall structural strength and deformation resistance of an end cover assembly are improved, so that sealing performance of the battery cells is improved, and service life of the battery cells is further improved.

An embodiment of this application provides an electrical apparatus using a battery as a power source, and the electrical apparatus may be, but is not limited to, a mobile phone, a tablet, a notebook computer, an electric toy, an electric tool, a battery car, an electric vehicle, a ship, a spacecraft, or the like. The electric toy may include a stationary electric toy or a mobile electric toy, such as a game console, an electric car toy, an electric ship toy, and an electric airplane toy. The spacecraft may include an airplane, a rocket, a space shuttle, a spaceship, and the like.

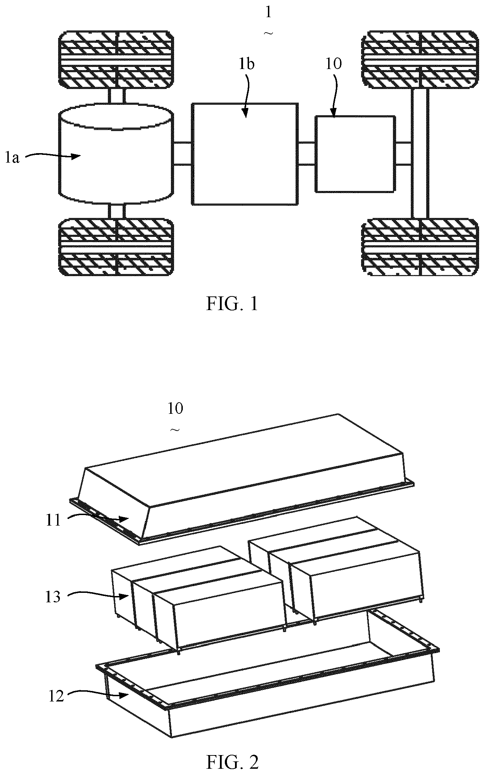

For ease of description, a vehicle 1 is used as an example. FIG. 1 is a schematic structural diagram of the vehicle 1 according to an embodiment of this application. The vehicle 1 may be a fuel-engined vehicle, a gas-engined vehicle, or a new energy vehicle, and the new energy vehicle may be a battery electric vehicle, a hybrid electric vehicle, or an extended-range electric vehicle. The vehicle 1 includes a motor 1a, a controller 1b, and a battery 10. The controller 1b may be configured to control the battery 10 to supply power to the motor 1a. The motor 1a is connected to wheels through a transmission mechanism to drive the vehicle 1 to move.

The battery 10 may be disposed inside the vehicle 1, for example, at the front, rear or bottom of the vehicle 1. The battery 10 may be a battery pack or a battery module.

As an example, the battery 10 may be used as an operating power source of the vehicle 1 for a circuit system of the vehicle 1. Alternatively, the battery 10 is configured for working power requirements during startup, navigation, and traveling of the vehicle 1.

In another embodiment of this application, the battery 10 may not only be used as the operating power source of the vehicle 1, but also may be used as a driving power source of the vehicle 1 to provide driving power for the vehicle 1 in place of or partially in place of fuel or natural gas.

FIG. 2 is a schematic diagram of an exploded structure of the battery 10 according to an embodiment of this application. In some embodiments, to meet different power requirements, the battery 10 may include one or more battery modules 13 (or also referred to as a battery module group). The plurality of battery modules 13 may be connected in series, in parallel, or in a mixed manner, and the mixed manner refers to a mixture of series connection and parallel connection.

In addition, the battery 10 may further include another structure. For example, the battery 10 includes a box body, and the box body includes a first portion 11 and a second portion 12. The first portion 11 and the second portion 12 are closed and form an accommodation portion, and the plurality of battery modules 13 are disposed in the box body. However, the embodiment of this application is not limited thereto.

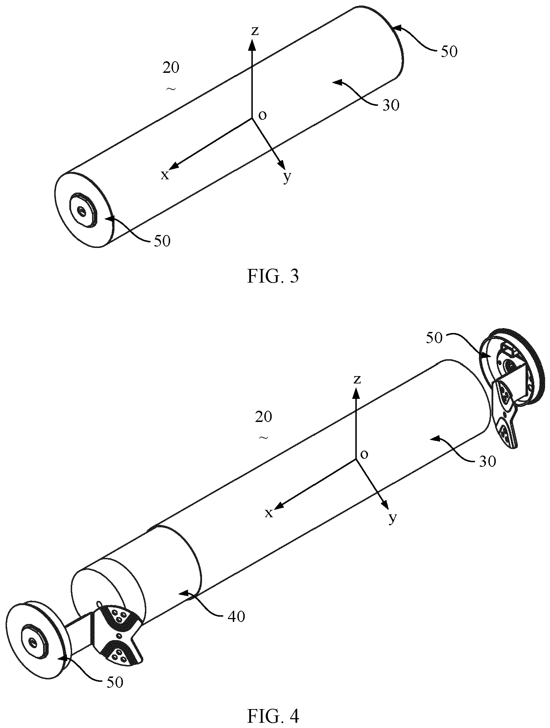

As shown in FIG. 2 to FIG. 4, FIG. 3 is a schematic structural diagram of a battery cell 20 according to an embodiment of this application, and FIG. 4 is a schematic diagram of an exploded structure of a battery cell 20 according to an embodiment of this application. In the embodiment shown in the figure, the battery 10 may include one or more battery cells 20 depending on different power requirements. For example, one battery 10 may include a plurality of battery cells 20, and the plurality of battery cells 20 may be connected in series, in parallel or in a mixed manner to implement larger capacity or power. A quantity of battery cells 20 included in one battery 10 may be set to any value. The battery 10 may be directly composed of a plurality of battery cells 20 connected in series, in parallel or in a mixed manner; or a plurality of battery cells 20 are connected in series, in parallel, or in a mixed manner to form a battery module 13, and then a plurality of battery modules 13 are connected in series, in parallel, or in a mixed manner to form the battery 10. The battery 10 may further include another structure, for example, the battery 10 may further include a bus component, configured to implement electrical connection between the plurality of battery cells 20.

Each battery cell 20 may include, but is not limited to, a lithium-ion secondary battery, a lithium-ion primary battery, a lithium-sulfur battery, a sodium-lithium-ion battery or a magnesium-ion battery. A shape of the battery cell 20 may be a cylinder, a flat body, a cuboid, or another shape. This application uses an example in which the battery cell 20 is a cylinder for description.

As shown in FIG. 3 to FIG. 4, the battery cell 20 in the embodiments of this application includes a housing 30, an electrode assembly 40, and an end cover assembly 50. The housing 30 has an opening, the housing 30 has an inner space for accommodating the electrode assembly 40 and electrolyte, and the inner space is communicated with the opening. The housing 30 may be made of a material such as aluminum, aluminum alloy, or plastic, and a shape of the housing 30 may be a cylinder or a cuboid, or may be another shape. The end cover assembly 50 covers the opening of the housing 30 to enclose the electrode assembly 40 in the housing 30.

The electrode assembly 40 may be formed by stacking or winding a positive electrode plate, a negative electrode plate, and a separator. The separator is an insulator located between the positive electrode plate or the negative electrode plate. Each of the positive electrode plate and the negative electrode plate includes a coated region and an uncoated region. The coated region of the positive electrode plate is coated with a positive electrode active material. The coated region of the negative electrode plate is coated with a negative electrode active material. A current collector formed by a metal sheet is coated with an active material, and the uncoated region is not coated with the active material.

The electrode assembly 40 includes a main body portion and a tab, and the tab is divided into a positive tab and a negative tab. The main body portion has two ends that are oppositely disposed. The positive tab and the negative tab are respectively disposed at two ends of the electrode assembly 40 along a first direction (the x-axis directions shown in FIG. 3 and FIG. 4). It can be understood that, the first direction may be a length direction of the electrode assembly 40. The uncoated region of the positive electrode plate is stacked to form the positive tab, and the uncoated region of the negative electrode plate is stacked to form the negative tab.

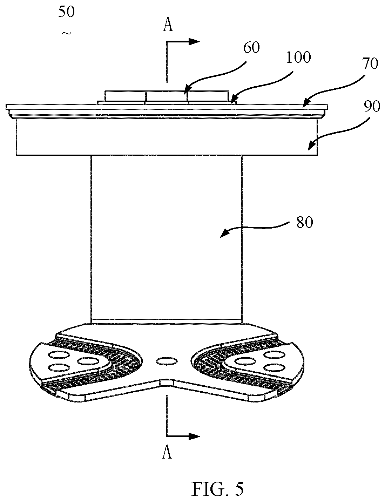

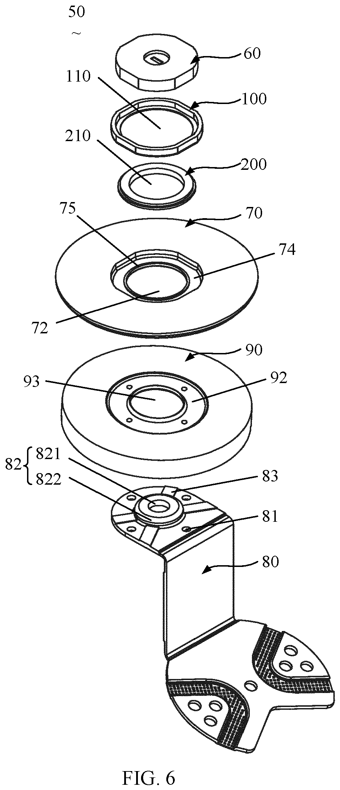

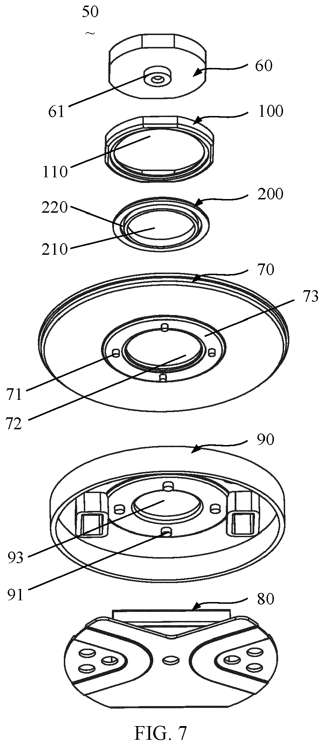

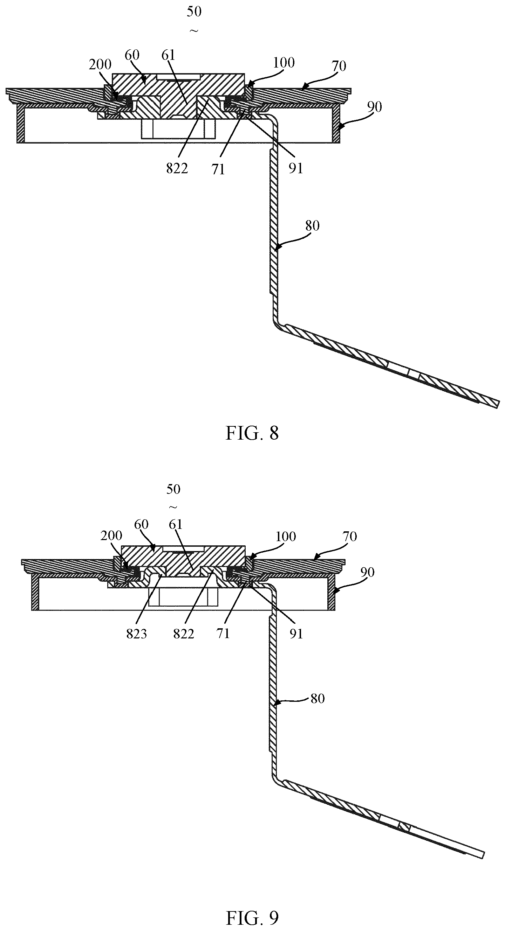

As shown in FIG. 3 to FIG. 8, FIG. 5 is a schematic structural diagram of an end cover assembly 50 according to an embodiment of this application, FIG. 6 is a schematic diagram of an exploded structure of an end cover assembly 50 from a perspective (a connecting member is in an unfolded state) according to an embodiment of this application, FIG. 7 is a schematic diagram of an exploded structure of an end cover assembly 50 from another perspective (a connecting member is in a folded state) according to an embodiment of this application, and FIG. 8 is a schematic diagram of a cross-sectional structure of an end cover assembly 50 along a direction A-A according to an embodiment of this application.

The end cover assembly 50 includes an end cover 70, an electrode terminal 60, and a connecting member 80. The end cover 70 is connected to the housing 30 in a sealing manner, that is, the end cover 70 covers the opening of the housing 30 in a sealing manner. The end cover 70 is provided with an electrode lead-out hole 72, the electrode terminal 60 is disposed on the end cover 70, and the electrode terminal 60 covers the electrode lead-out hole 72 to seal the electrode lead-out hole 72. The electrode terminal 60 is electrically connected to the tab of the electrode assembly 40 through the connecting member 80, to guarantee normal current conduction between the electrode terminal 60 and the electrode assembly 40. Each of the two ends of the electrode assembly 40 along the first direction is provided with one end cover assembly 50. The electrode terminal 60 of the end cover assembly 50 corresponding to the positive tab is electrically connected to the positive tab through the connecting member 80, and the electrode terminal 60 of the end cover assembly 50 corresponding to the negative tab is electrically connected to the negative tab through the connecting member 80. It can be understood that, the end cover assembly 50 may alternatively be provided with two electrode terminals 60, and each electrode terminal 60 is electrically connected to the positive tab or the negative tab through a respective connecting member 80. Certainly, a same side of the housing 30 may alternatively be provided with two openings, and each opening is covered with one end cover assembly 50.

A side, facing the inside of the battery cell 20, of the end cover 70 is provided with a first mating portion 71, and the connecting member 80 is provided with a second mating portion 81. The second mating portion 81 is configured to be mated with the first mating portion 71, to provide deformation resistance of the connecting member 80 along a radial direction of the electrode lead-out hole 72.

According to the end cover assembly 50 in the embodiments of this application, the side (the side, facing the connecting member 80, of the end cover 70), facing the inside of the battery cell 20, of the end cover 70 is provided with the first mating portion 71, the connecting member 80 is provided with the second mating portion 81, and the second mating portion 81 and the first mating portion 71 are mated, so that the end cover 70 and the connecting member 80 may support each other at a position where the first mating portion 71 and the second mating portion 81 are mated, which improves structural strength of the connecting member 80, thereby improving the deformation resistance of the connecting member 80 along the radial direction of the electrode lead-out hole 72, and effectively resolving a problem of leakage of the battery cell 20 caused when the electrode terminal 60 is displaced or even detached from the end cover 70 because the connecting member 80 has low structural strength and is easily deformed due to collision, pulling, and the like of battery cells 20.

In some embodiments, as shown in FIG. 6 to FIG. 8, the first mating portion 71 and the second mating portion 81 are mated in a plug-in manner along an axial direction of the electrode lead-out hole 72. The first mating portion 71 and the second mating portion 81 are mated in a plug-in manner, so that the first mating portion 71 and the second mating portion 81 are structurally nested with each other, to act upon each other along the radial direction of the electrode lead-out hole 72. For example, when the connecting member 80 is deformed along the radial direction of the electrode lead-out hole 72, if further deformation is required in this case, the end cover 70 or the first mating portion 71 of the end cover 70 is also required to be deformed, which undoubtedly increases deformation difficulty of the connecting member 80, thereby improving the structural strength between the end cover 70 and the connecting member 80, and improving the deformation resistance of the connecting member 80.

Specifically, one of the first mating portion 71 and the second mating portion 81 is a first connecting convex portion, the other is a first connecting hole, the first connecting convex portion is at least partially located in the corresponding first connecting hole, and the first mating portion 71 is disposed on an outer periphery of the electrode lead-out hole 72.

Since the first mating portion 71 is located on the outer periphery of the electrode lead-out hole 72, and the first connecting convex portion is at least partially located in the first connecting hole, the first connecting convex portion may provide a positioning and supporting function, which limits further movement or deformation of the connecting member 80 along the radial direction of the electrode lead-out hole 72. When the end cover 70 and the connecting member 80 are mated for mounting, the first connecting convex portion may be directly inserted into the first connecting hole. In this way, positioning and mounting of the end cover 70 and the connecting member 80 are facilitated, and the assembly is convenient, helping improve assembly efficiency.

As an example, a shape of the first connecting convex portion may be a cylinder, a prism, or another convex structure, and correspondingly, the first connecting hole may be a circular hole, a polygonal hole, or a hole in another shape. The first connecting hole may be a blind hole or a through hole.

In some other embodiments, each of the first mating portion 71 and the second mating portion 81 is a first connecting convex portion, and along the radial direction of the electrode lead-out hole 72, a side wall, facing away from the electrode lead-out hole 72, of the first mating portion 71 abuts on a side wall, facing the electrode lead-out hole 72, of the second mating portion 81, to provide the deformation resistance of the connecting member 80 along the radial direction of the electrode lead-out hole 72.

In some embodiments, the end cover 70 is provided with a plurality of first mating portions 71, and the plurality of first mating portions 71 are evenly distributed along a circumferential direction of the electrode lead-out hole 72. As an example, the plurality of first mating portions 71 are disposed on the end cover 70 in a circular array, and the center of the circular array is coaxial with the axis of the electrode lead-out hole 72. The connecting member 80 is provided with a plurality of second mating portions 81, and the second mating portions 81 are disposed in a one-to-one correspondence with the first mating portions 71.

In the embodiment, the plurality of first mating portions 71 are evenly distributed on the end cover 70 along the circumferential direction of the electrode lead-out hole 72, so that after each first mating portion 71 is mated with the corresponding second mating portion 81, the structural strength of the connecting member 80 at each position along the circumferential direction of the electrode lead-out hole 72 is improved, thereby improving the radial deformation resistance of the entire connecting member 80.

In some embodiments, the first mating portion 71 is a first connecting convex portion, and a projection of the first connecting convex portion along the axial direction of the electrode lead-out hole 72 at least partially overlaps the electrode terminal 60. In other words, the projection of the first connecting convex portion along the axial direction of the electrode lead-out hole 72 overlaps a part, covering the electrode lead-out hole 72, of the electrode terminal 60, so that an overlapping part of the electrode terminal 60 and the projection provides a supporting function for the end cover 70 at a position where the first connecting convex portion is disposed, which improves structural strength of a support portion of the end cover 70, reduces a possibility of deformation of the end cover 70 at the position where the first mating portion 71 is disposed, and also helps improve sealing performance at the connection between the electrode terminal 60 and the end cover 70.

It can be understood that, in some other embodiments, the first mating portion 71 may alternatively be a first connecting hole, and a projection of the first connecting hole along an axial direction of the first connecting hole at least partially overlaps the electrode terminal 60.

In some embodiments, the end cover assembly 50 further includes a first insulating member 90, the first insulating member 90 is disposed between the end cover 70 and the connecting member 80, and the first insulating member 90 is configured to insulate and isolate the end cover 70 from the connecting member 80. The first insulating member 90 is provided with an insulating portion 91, the insulating portion 91 has an accommodation cavity, and the accommodation cavity is used to accommodate the first mating portion 71 and/or the second mating portion 82, to isolate the end cover 70 from the connecting member 80, and avoid contact conduction, through the first mating portion 71 and/or the second mating portion 81, between the connecting member 80 and the end cover 70.

In some optional embodiments, the first mating portion 71 is a first connecting convex portion, and the second mating portion 81 is a first connecting hole. The insulating portion 91 protrudes toward a direction of the first connecting hole and is located in the first connecting hole. An accommodation cavity for wrapping the first connecting convex portion is formed on a side, close to the first connecting convex portion, of the insulating portion 91. The first connecting convex portion is located in the accommodation cavity, so that the insulating portion 91 wraps the first connecting convex portion and is located in the first connecting hole together with the first connecting convex portion, to insulate the end cover 70 from the connecting member 80. It can be understood that, in some other embodiments, the first mating portion 71 may alternatively be a first connecting hole, and the second mating portion 81 may be a first connecting convex portion.

In some other embodiments, each of the first mating portion 71 and the second mating portion 81 may alternatively be a first connecting bulge. In addition, a side, facing the first mating portion 71, of the insulating portion 91 is provided with a first accommodation cavity for accommodating the first mating portion 71, and a side, facing the second mating portion 81, of the insulating portion 91 is provided with a second accommodation cavity for accommodating the second mating portion 81, so that the insulating portion 91 isolates the first mating portion 71 from the second mating portion 81, thereby avoiding contact conduction, through the first mating portion 71 and the second mating portion 81, between the connecting member 80 and the end cover 70.

In some embodiments, the first mating portion 71 is a first connecting convex portion, and the second mating portion 81 is a first connecting hole. A side, facing the first insulating member 90, of the end cover 70 is provided with a limiting convex portion 73, the limiting convex portion 73 is disposed around the outer periphery of the electrode lead-out hole 72, and the first connecting convex portion is disposed on the limiting convex portion 73. One side, facing the end cover 70, of the first insulating member 90 is provided with a first groove 92 that is matched with the limiting convex portion 73, and the bottom of the first groove 92 is provided with a first through hole 93 that is communicated with the electrode lead-out hole 72. The insulating portion 91 is disposed on the other side, facing away from the first groove 92, of the first insulating member 90, and the accommodation cavity is communicated with the first groove 92. The limiting convex portion 73 is mated with the first groove 92 to limit movement of the end cover 70 relative to the first insulating portion along the radial direction of the electrode lead-out hole 72, which improves connection reliability of the end cover 70 and the first insulating member 90, thereby facilitating positioning and mounting.

In some embodiments, the end cover assembly 50 further includes a second insulating member 100, the second insulating member 100 is disposed between the electrode terminal 60 and the end cover 70, and the second insulating member 100 is configured to isolate the electrode terminal 60 from the end cover 70.

In some specific embodiments, a side, facing the electrode terminal 60, of the end cover 70 is provided with a second groove 74. The second groove 74 is disposed around the outer periphery of the electrode lead-out hole 72. The second groove 74 is matched with the second insulating member 100. The second insulating member 100 is disposed in the second groove 74. A side, facing the electrode terminal 60, of the second insulating member 100 is provided with an accommodating portion, and the bottom of the accommodating portion is provided with a second through hole 110 communicated with the electrode lead-out hole 72. The electrode terminal 60 is at least partially located in the accommodating portion, so that the first insulating member 90 insulates the electrode terminal 60 from the end cover 70, thereby making the electrode terminal 60 at least partially located in the second groove 74 of the end cover 70. In this way, the second groove 74 may limit movement of the electrode terminal 60 relative to the end cover 70 along the radial direction of the electrode lead-out hole 72.

In some embodiments, the end cover assembly 50 further includes a sealing member 200, and the sealing member 200 is disposed between the electrode terminal 60 and the end cover 70 and is configured to seal a connection gap between the electrode terminal 60 and the end cover 70.

In some specific embodiments, the sealing member 200 is provided with a third through hole 210 that is communicated with the electrode lead-out hole 72. A side, facing the end cover 70, of the sealing member 200 is provided with a third groove 220. The third groove 220 is disposed around an outer periphery of the third through hole 210. An inner peripheral wall of the electrode lead-out hole 72 extends along the axial direction of the electrode lead-out hole 72 toward a side close to the electrode terminal 60 to form an abutting portion 75. The abutting portion 75 is disposed in the third groove 220. The sealing member 200 is located between a side, where a third mating portion 61 is disposed, of the electrode terminal 60 and the first abutting portion 75, so that the side, where the third mating portion 61 is disposed, of the electrode terminal 60 and the abutting portion 75 implement a sealing effect by squeezing the sealing member 200.

In some embodiments, the electrode terminal 60 is provided with the third mating portion 61, the connecting member 80 is provided with a fourth mating portion 82 mated with the third mating portion 61, and at least one of the fourth mating portion 82 and the third mating portion 61 extends into the electrode lead-out hole 72, to be fixedly connected to the other.

The electrode terminal 60 is fixed with the connecting member 80 through a fixed connection, for example, laser welding or ultrasonic welding between the third mating portion 61 and the fourth mating portion 82, so that the electrode terminal 60 is not easily detached from the connecting member 80 along the axial direction of the electrode lead-out hole 72.

In some embodiments, the fourth mating portion 82 is disposed, in a region enclosed by the plurality of second mating portions 81, on the connecting member 80, so that the connecting member 80 and the electrode terminal 60 are mated and fixed with each other through the fourth mating portion 82 and the third mating portion 61. The connecting member 80 and the end cover 70 are mated and connected through the second mating portion 81 and the first mating portion 71, so that the electrode terminal 60, the end cover 70, and the connecting member 80 act upon each other, thereby improving strength of an overall structure formed after the three are mated, improving overall structural strength of the end cover assembly 50, and also improving the deformation resistance of the connecting member 80.

In some embodiments, the third mating portion 61 and the fourth mating portion 82 are mated in a plug-in manner along the axial direction of the electrode lead-out hole 72. The third mating portion 61 and the fourth mating portion 82 are mated in a plug-in manner, so that the third mating portion 61 and the fourth mating portion 82 are structurally nested with each other, and the electrode terminal 60 and the connecting member 80 may be mutually restricted from moving or deforming along the radial direction of the electrode lead-out hole 72. After the first mating portion 71 and the second mating portion 81 are mated, the connecting member 80 and the end cover 70 are also mutually restricted from moving or deforming along the radial direction of the electrode lead-out hole 72. Therefore, the electrode terminal 60, the end cover 70, and the connecting member 80 are also restricted by one another from moving or deforming, which improves stability of the overall structure. When the electrode terminal 60 is pulled by a bus component, difficulty that the electrode terminal 60 and the end cover 70 are displaced from the end cover 70 along the radial direction of the electrode lead-out hole 72 is increased.

Specifically, in some embodiments, the third mating portion 61 includes a second connecting convex portion, the fourth mating portion 82 includes a second connecting hole 821, and the second connecting convex portion is fixed in the second connecting hole 821. In this way, the positioning and mounting of the electrode terminal 60 and the adapter 80 may be facilitated. When the second connecting hole 821 is a through hole, and when the electrode terminal 60 and the connecting member 80 are connected by welding, the welding quality may be seen more intuitively, and connection reliability of the electrode terminal 60 and the connecting member 80 can be better guaranteed, compared with a case in which an upper surface of the fourth mating portion 82 and a lower surface of the third mating portion 61 are directly fixed by welding.

In some embodiments, the fourth mating portion 82 further includes a third connecting convex portion 822, the third connecting convex portion 822 extends along the axial direction of the electrode lead-out hole 72 toward a side close to the end cover 70, and the second connecting hole 821 is disposed on the third connecting convex portion 822.

The fourth mating portion 82 of the connecting member 80 is set to extend along the axial direction of the electrode lead-out hole 72 toward the side close to the end cover 70, thereby increasing thickness of the third connecting convex portion 822 along the axial direction of the electrode lead-out hole 72. In addition, the second connecting hole 821 is disposed on the third connecting convex portion 822, which increases depth of the second connecting hole 821 along its axial direction, further increases a contact area of the second connecting convex portion in the second connecting hole 821, improves connection reliability of the electrode terminal 60 and the connecting member 80, and improves the structural strength of the connecting member 80. The second connecting hole 821 may be a through hole or a blind hole. Optionally, the second connecting hole 821 is a through hole.

As shown in FIG. 6 and FIG. 9, FIG. 9 is a schematic diagram of a cross-sectional structure of an end cover assembly 50 along a direction A-A according to another embodiment of this application. In some embodiments, the connecting member 80 is recessed toward a direction away from the electrode lead-out hole 72 to form the foregoing third connecting convex portion 822, an inner peripheral wall of the second connecting hole 821 extends along an axial direction of the second connecting hole 821 toward a direction away from the end cover 70, to form a flange 823, and the flange 823 is in contact with an outer peripheral wall of the second connecting convex portion.

In this embodiment, the third connecting convex portion 822 is of a convex structure formed when one side, facing away from the electrode lead-out hole 72, of the connecting member 80 is recessed toward the other side close to the electrode lead-out hole 72, so that a cavity is formed in the third connecting convex portion 822. The inner peripheral wall of the second connecting hole 821 extends along its axial direction toward the direction away from the end cover 70 to form the flange 823, which increases a contact area of the inner peripheral wall of the second connecting hole 821 and the second connecting convex portion, thereby guaranteeing the strength of the connecting structure. Meanwhile, the third connecting convex portion 822 is formed by recessing, so that a weight of the end cover assembly 50 is reduced, and an energy density of the battery cell 20 is increased. The third connecting convex portion 822 and the flange 823 may be formed by stamping, so that the structure is simple, and the processing is convenient.

In some embodiments, the third connecting convex portion 822 is at least partially accommodated in the electrode lead-out hole 72. The second connecting convex portion is accommodated in the electrode lead-out hole 72, so that a space in the electrode lead-out hole 72 is utilized, which may reduce a space occupied by the third connecting convex portion 822 of the connecting member 80 in the battery cell 20, thereby increasing the energy density of the battery cell 20.

In some embodiments, the connecting member 80 further includes at least two reinforcing blocks 83, the reinforcing blocks 83 and the second mating portion 81 are disposed alternately along the circumferential direction of the electrode lead-out hole 72, that is, the reinforcing blocks 83 and the second mating portion 81 are disposed alternately around the outer periphery of the fourth mating portion 82 on the connecting member 80. The reinforcing blocks 83 are disposed, so that the structural strength of the connecting member 80 may be further improved, and the deformation resistance of the connecting member 80 is increased.

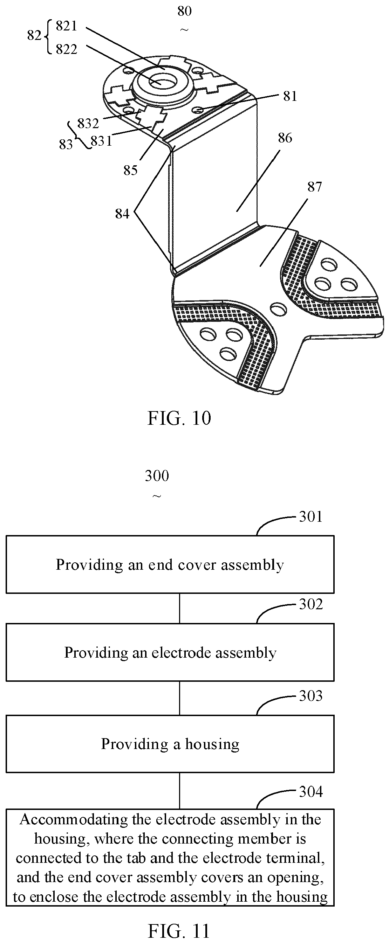

In some embodiments, with reference to FIG. 6 and FIG. 10, FIG. 10 is a schematic structural diagram of a connecting member 80 in an unfolded state according to an embodiment of this application, where the reinforcing block 83 includes a radial reinforcing rib 831 and/or a circumferential reinforcing rib 832. The radial reinforcing rib 831 refers to a rib plate that is disposed on the connecting member 80 and whose length direction extends along the radial direction of the electrode lead-out hole 72; and the circumferential reinforcing rib 832 refers to a rib plate that is disposed on the connecting member 80 and whose length direction extends along the circumferential direction of the electrode lead-out hole 72. No matter the radial reinforcing rib 831 or the circumferential reinforcing rib 832 is included, the structural strength of the connecting member 80 may be improved, and the deformation resistance of the connecting member 80 may be improved.

In an optional embodiment, the reinforcing block 83 includes the radial reinforcing rib 831 and the circumferential reinforcing rib 832, and the radial reinforcing rib 831 and the circumferential reinforcing rib 832 are disposed in a cross manner.

In some embodiments, cross sections of the radial reinforcing rib 831 and/or the circumferential reinforcing rib 832 along a length direction thereof are arch-shaped, which increases deformation resistance of the connection reinforcing ribs through the arch-shaped cross sections, thereby improving the deformation resistance of the connecting member 80.

It can be understood that, in some other embodiments, cross sections of the radial reinforcing rib 831 and/or the circumferential reinforcing rib 832 along the length direction thereof may alternatively be in other shapes, for example, but are not limited to, rectangles.

An embodiment of this application further provides a method for preparing a battery cell 20. For a part that is not described in detail, reference may be made to the foregoing embodiments.

As shown in FIG. 3, FIG. 4, FIG. 7, and FIG. 10, the connecting member 80 includes at least two non-bending portions and a bending portion 84 connected between two adjacent non-bending portions. The connecting member 80 uses such a structure composed of a non-bending portion and a bending portion 84, so that the connecting member 80 may be in an unfolded state during assembly, which is convenient for connecting the connecting member 80 to the electrode terminal 60 and the tab. When the end cover assembly 50 covers the opening of the housing 30, the connecting member 80 may be bent into a laminated structure in the housing 30, thereby reducing the space occupied by the connecting member 80 inside the battery cell 20 and increasing the energy density of the battery cell 20.

In an optional embodiment, the at least two non-bending portions include a first non-bending portion 85, a second non-bending portion 86, and a third non-bending portion 87. The second non-bending portion 86 is located between the first non-bending portion 85 and the third non-bending portion 87, the first non-bending portion 85 is connected to the electrode terminal 60, and the third non-bending portion 87 is connected to the tab of the electrode assembly 40. The connecting member 80 may be connected by welding, such as laser welding, ultrasonic welding, or the like. When the connecting member 80 is connected to the electrode terminal 60, it is only necessary to weld the first non-bending portion 85 and the electrode terminal 60. When the connecting member 80 is connected to the tab, it is only necessary to weld the third non-bending portion 87 and the tab, and it is not necessary to weld the entire connecting member 80, which greatly reduces difficulty of welding the connecting member 80 and the electrode terminal 60 and the tab.

It should be noted that each of the second mating portion 81, the fourth mating portion 82, and the reinforcing block 83 in the foregoing embodiments is disposed on the first non-bending portion 85 of the connecting member 80.

The end cover assembly 50, the battery cell 20, the battery 10, and the electrical apparatus in the embodiments of this application are described above. The method for preparing a battery cell 20 in the embodiments of this application is described below. For a part that is not described in detail, reference may be made to the foregoing embodiments.

This application further provides a method 300 for preparing a battery cell 20. As shown in FIG. 3 to FIG. 11, FIG. 11 is a schematic flowchart of the method 300 for preparing a battery cell according to an embodiment of this application.

The method 300 for preparing a battery cell 20 includes the following steps.

In step 301, an end cover assembly 50 is provided, where the end cover assembly 50 includes: an end cover 70, where the end cover 70 is provided with an electrode lead-out hole 72, and a side, facing the inside of the battery cell 20, of the end cover 70 is provided with a first mating portion 71; an electrode terminal 60, where the electrode terminal 60 is disposed on the end cover 70 and covers the electrode lead-out hole 72; and a connecting member 80, where the connecting member 80 is configured to electrically connect the electrode terminal 60 and an electrode assembly 40 of the battery cell 20, the connecting member 80 is provided with a second mating portion 81, and the second mating portion 81 is configured to be mated with the first mating portion 71, to provide deformation resistance of the connecting member 80 along a radial direction of the electrode lead-out hole 72.

In step 302, the electrode assembly 40 is provided, where the electrode assembly 40 includes a main body portion and a tab.

In step 303, a housing 30 is provided, where the housing 30 has an opening.

In step 304, the electrode assembly 40 is accommodated in the housing 30, where the connecting member 80 is connected to the tab and the electrode terminal 60, and the end cover assembly 50 covers the opening, to enclose the electrode assembly 40 in the housing 30.

In the end cover assembly 50, the first mating portion 71 and the second mating portion 81 are mated with each other, so that the end cover 70 and the connecting member 80 may support each other at a position where the first mating portion 71 and the second mating portion are mated, which improves the structural strength of the connecting member 80, and improves the deformation resistance of the connecting member 80 along the radial direction, thereby resolving a problem that the connecting member 80 is detached from the electrode terminal 60 after being deformed due to low structural strength.

Finally, it should be noted that, the foregoing embodiments are merely intended for describing the technical solutions in this application, but not for limiting this application. Although this application is described in detail with reference to the foregoing embodiments, those of ordinary skill in the art should understand that they may still make modifications to the technical solutions described in the foregoing embodiments or make equivalent replacements to some technical features thereof, without departing from the spirit and scope of the technical solutions of the embodiments of this application.

## Claims

1. An end cover assembly, applied to a battery cell and comprising:
an end cover (70), wherein the end cover (70) is provided with an electrode lead-out hole (72), and a side, facing the inside of the battery cell, of the end cover (70) is provided with a first mating portion (71);
an electrode terminal (60), wherein the electrode terminal (60) is disposed on the end cover (70) and covers the electrode lead-out hole (72); and
a connecting member (80), wherein the connecting member (80) is configured to electrically connect the electrode terminal (60) and an electrode assembly (40) of the battery cell, the connecting member (80) is provided with a second mating portion (81), and the second mating portion (81) is configured to be mated with the first mating portion (71), to provide deformation resistance of the connecting member (80) along a radial direction of the electrode lead-out hole (72).

2. The end cover assembly according to claim 1, wherein the first mating portion (71) and the second mating portion (81) are mated in a plug-in manner along an axial direction of the electrode lead-out hole (72).

3. The end cover assembly according to claim 2, wherein one of the first mating portion (71) and the second mating portion (81) is a first connecting convex portion, the other is a first connecting hole, the first connecting convex portion is at least partially located in the corresponding first connecting hole, and the first mating portion (71) is disposed on an outer periphery of the electrode lead-out hole (72).

4. The end cover assembly according to any one of claims 1 to 3, wherein the end cover (70) is provided with a plurality of first mating portions (71), and the plurality of first mating portions (71) are evenly distributed along a circumferential direction of the electrode lead-out hole (72); and
the connecting member (80) is provided with a plurality of second mating portions (81), and the second mating portions (81) are disposed corresponding to the first mating portions (71).

5. The end cover assembly according to claim 3 or 4, wherein the first mating portion (71) is a first connecting convex portion, and a projection of the first connecting convex portion along an axial direction at least partially overlaps the electrode terminal (60).

6. The end cover assembly according to any one of claims 1 to 5, wherein the end cover assembly further comprises a first insulating member (90), the first insulating member (90) is disposed between the end cover (70) and the connecting member (80), the first insulating member (90) is provided with an insulating portion (91), the insulating portion (91) has an accommodation cavity, and the accommodation cavity is used to accommodate the first mating portion (71) and/or the second mating portion (81), to isolate the end cover (70) from the connecting member (80).

7. The end cover assembly according to any one of claims 1 to 6, wherein the electrode terminal (60) is provided with a third mating portion (61), the connecting member (80) is provided with a fourth mating portion (82) mated with the third mating portion (61), and at least one of the fourth mating portion (82) and the third mating portion (61) extends into the electrode lead-out hole (72), to be fixedly connected to the other.

8. The end cover assembly according to claim 7, wherein the third mating portion (61) and the fourth mating portion (82) are mated in a plug-in manner along the axial direction of the electrode lead-out hole (72).

9. The end cover assembly according to claim 8, wherein the third mating portion (61) comprises a second connecting convex portion, the fourth mating portion (82) comprises a second connecting hole (821), and the second connecting convex portion is fixed in the second connecting hole (821).

10. The end cover assembly according to claim 9, wherein the fourth mating portion (82) further comprises a third connecting convex portion (822), the third connecting convex portion (822) extends along the axial direction of the electrode lead-out hole (72) toward a side close to the end cover (70), and the second connecting hole (821) is disposed on the third connecting convex portion (822).

11. The end cover assembly according to claim 10, wherein a side, facing away from the electrode lead-out hole (72), of the connecting member (80) is recessed in a direction close to the electrode lead-out hole (72), to form the third connecting convex portion (822), an inner peripheral wall of the second connecting hole (821) extends along an axial direction of the second connecting hole (821) toward a direction away from the end cover (70), to form a flange (823), and the flange (823) is in contact with an outer peripheral wall of the third connecting convex portion (822).

12. The end cover assembly according to claim 10 or 11, wherein the third connecting convex portion (822) is at least partially accommodated in the electrode lead-out hole (72).

13. The end cover assembly according to any one of claims 1 to 12, wherein the connecting member (80) further comprises at least two reinforcing blocks (83), and the reinforcing blocks (83) and the second mating portion (81) are disposed alternately along the circumferential direction of the electrode lead-out hole (72).

14. A battery cell, comprising:
a housing (30), wherein the housing (30) has an opening;
an electrode assembly (40), wherein the electrode assembly (40) is accommodated in the housing (30), and the electrode assembly (40) comprises a main body portion and a tab; and
the end cover assembly according to any one of claims 1 to 12, wherein the end cover (70) covers the opening of the housing (30), to enclose the electrode assembly (40) in the housing (30), and the connecting member (80) is connected to the tab and the electrode terminal (60).

15. A battery, comprising the battery cell according to claim 14.

16. An electrical apparatus, comprising the battery cell according to claim 14, wherein the battery cell is configured to supply power.

17. A method for preparing a battery cell, comprising:
providing an end cover assembly, wherein the end cover assembly comprises:
an end cover (70), wherein the end cover (70) is provided with an electrode lead-out hole (72), and a side, facing the inside of the battery cell, of the end cover (70) is provided with a first mating portion (71);
an electrode terminal (60), wherein the electrode terminal (60) is disposed on the end cover (70) and covers the electrode lead-out hole (72); and
a connecting member (80), wherein the connecting member (80) is configured to electrically connect the electrode terminal (60) and an electrode assembly (40) of the battery cell, the connecting member (80) is provided with a second mating portion (81), and the second mating portion (81) is configured to be mated with the first mating portion (71), to provide deformation resistance of the connecting member (80) along a radial direction of the electrode lead-out hole (72);
providing the electrode assembly (40), wherein the electrode assembly (40) comprises a main body portion and a tab;
providing a housing (30), wherein the housing (30) has an opening; and
accommodating the electrode assembly (40) in the housing (30), wherein the connecting member (80) is connected to the tab and the electrode terminal (60), and the end cover assembly covers the opening, to enclose the electrode assembly (40) in the housing (30).
